# FASCICULE DE BREVET EUROPEEN

(11) **EP 3 397 541 B1**
(45) Date de publication et mention de la délivrance du brevet: **05.02.2020**
(21) Numéro de dépôt: 16829412.2
(22) Date de dépôt: 19.12.2016
(51) Int. Cl.: B62D 35/00

(54) **BECQUET POUR VEHICULE AUTOMOBILE MUNI D'UN ELEMENT MOBILE PASSIF**
SPOILER FÜR KRAFTFAHRZEUGE MIT EINEM PASSIVEN BEWEGLICHEN ELEMENT
SPOILER FOR MOTOR VEHICLE PROVIDED WITH A PASSIVE MOBILE ELEMENT

(30) Priorité: 30.12.2015 FR 1563472
(43) Date de publication de la demande: 07.11.2018
(73) Titulaire: Compagnie Plastic Omnium, 69007 Lyon (FR)
(72) Inventeur: STABLO, Frédéric, 38390 Porcieu Amblagnieu (FR)
(74) Mandataire: LLR
(86) Numéro de dépôt international: PCT/FR2016/053543
(87) Numéro de publication internationale: WO 2017/115029

(56) Documents cités:
- DE-A1-102014 105 513
- FR-A1- 2 816 906
- FR-A1- 2 972 994

## Description

La présente invention concerne le domaine de l'automobile. Elle concerne plus particulièrement un becquet arrière de véhicule automobile.

Le document FR 2 972 994 A1 divulgue le préambule de la revendication 1.

On appelle becquet (ou aileron, en anglais « spoiler ») une pièce de carrosserie destinée à améliorer l'aérodynamique du véhicule sur laquelle cette pièce est placée. Les becquets sont également utilisés pour des aspects esthétiques du véhicule. Le becquet arrière est fixé à l'arrière du véhicule. Il s'agit donc d'une pièce de carrosserie située et fixée entre le pavillon et la lunette. Le becquet peut par exemple être fixé en partie haute et arrière du véhicule, entre le toit et le bord supérieur de la lunette, sur le toit ou sur le hayon.

On connaît des becquets arrière montés fixes sur un véhicule automobile. Un inconvénient de ces becquets est qu'il n'est pas possible d'améliorer l'aérodynamisme du véhicule en fonction de la vitesse.

Ainsi, les becquets arrière montés fixes ont une efficacité globale (pour chaque régime de vitesse) moyenne. Ils ne permettent pas d'obtenir la meilleure efficience pour chaque régime de vitesse.

On connaît des becquets arrière montés mobile sur un véhicule automobile. Ce type de becquet, en revanche, permet d'adapter la position du becquet en fonction du régime de vitesse, afin d'obtenir la meilleure efficience.

La position de ce type de becquet est modifiée au moyen de systèmes mécanisés ou hydrauliques permettant de faire varier la position du becquet en fonction de la vitesse.

Ainsi, les becquets arrière montés mobile ont une meilleure efficience, mais entrainent un surpoids du véhicule, du fait des moyens d'actionnement nécessaire, et entrainent une augmentation de la consommation énergétique liée au fonctionnement de ces moyens d'actionnement.

L'invention a pour but de remédier à ces inconvénients en proposant un becquet dont une partie seulement est mobile passivement.

On appelle déplacement passif, un déplacement ne nécessitant pas un apport d'énergie dédié à cette fonction de déplacement, notamment un apport d'énergie électrique.

Ainsi, l'objet de l'invention concerne un becquet arrière pour véhicule automobile destiné à être disposé dans une région d'un bord arrière de toit au-dessus d'une lunette arrière. Le becquet comporte une première partie munie d'une face supérieure sensiblement alignée avec un prolongement imaginaire d'une ligne d'écoulement d'air du toit. Le becquet comporte également une deuxième partie, montée mobile par rapport à la première partie, entre une position rétractée et une position sortie dans laquelle la portion de becquet en saillie au-dessus de la lunette arrière est augmentée. Enfin, le becquet comporte un système de déplacement passif apte à déplacer la deuxième partie en fonction de l'écoulement de l'air sur la face supérieure du becquet.

Un tel becquet permet de s'adapter au régime de vitesse, en modifiant sa longueur, afin d'améliorer l'aérodynamisme à l'arrière du véhicule.

Le becquet peut en outre comporter l'une ou plusieurs des caractéristiques suivantes, prises seules ou en combinaison :
- le système de déplacement passif comporte :
   - au moins un moyen de transmission, sur la deuxième partie, de la pression générée par l'écoulement de l'air ;
   - au moins un moyen de guidage du déplacement de la deuxième partie ; et
   - au moins un moyen de rappel de la deuxième partie, dans sa position rétractée ;
- la face supérieure du becquet comporte au moins une ouverture adaptée à canaliser l'écoulement d'air provenant du toit sur au moins une surface d'appui de la deuxième partie, de façon à transmettre sur la deuxième partie, la pression générée par l'écoulement de l'air, l'ouverture et la surface d'appui constituant un moyen de transmission ;
- la deuxième partie comporte des nervures permettant de supporter des efforts liés à l'écoulement d'air provenant du toit sur la surface d'appui ;
- la deuxième partie est réalisée par moussage interne avec une épaisseur permettant de supporter des efforts liés à l'écoulement d'air provenant du toit sur la surface d'appui ;
- la deuxième partie comporte un système d'évacuation de l'eau à la base de la surface d'appui ;
- la deuxième partie est montée mobile par rapport à la première partie 40 sur une partie du becquet au moyen d'une liaison glissière ;
- le moyen de guidage est un système coulissant comportant au moins une coulisse par laquelle la deuxième partie glisse, dans un sens ou dans l'autre, dans l'axe de la coulisse ;
- le moyen de guidage comporte des appuis recouverts de téflon ;
- le moyen de rappel comporte au moins un élément élastique, tel qu'un ressort ;
- la première partie comporte des joints de type racleur à ses extrémités ;
- la deuxième partie est munie d'une face supérieure portant la surface d'appui et une paroi mobile en aval de la surface d'appui ;
- la paroi mobile est montée mobile par rapport à la deuxième partie, de façon à pouvoir s'ouvrir passivement vers le haut, lorsque la deuxième partie est en position totalement sortie ou sensiblement proche de cette position ;
- la paroi mobile est mise en mouvement par un moyen d'actionnement passif, tel qu'un système de ressort ;
- la paroi mobile est montée mobile en rotation autour d'un axe orienté transversalement par rapport au véhicule lorsque le becquet est monté sur le véhicule ;
- le becquet comporte plusieurs ouvertures et plusieurs surfaces d'appui ;
- la première partie et/ou la deuxième partie sont en matière thermoplastique.

L'invention sera mieux comprise à la lecture des figures annexées, qui sont fournies à titre d'exemples et ne présentent aucun caractère limitatif, dans lesquelles :
- La figure 1 illustre une région d'un bord arrière de toit de véhicule automobile muni d'un becquet.
- Les figures 2A à 2C illustrent un exemple de réalisation d'un becquet selon l'invention, et son mode de fonctionnement.
- Les figures 3A à 3C illustrent un autre exemple de réalisation d'un becquet selon l'invention, et son mode de fonctionnement.

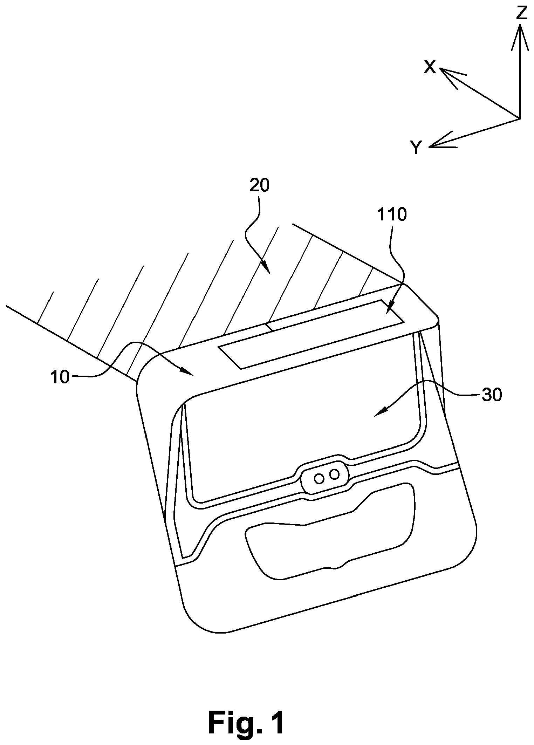

La figure 1 illustre un becquet 10 disposé dans une région d'un bord arrière de toit 20 au-dessus d'une lunette arrière 30. Le becquet peut ainsi être fixé sur le toit, ou embarqué sur le hayon.

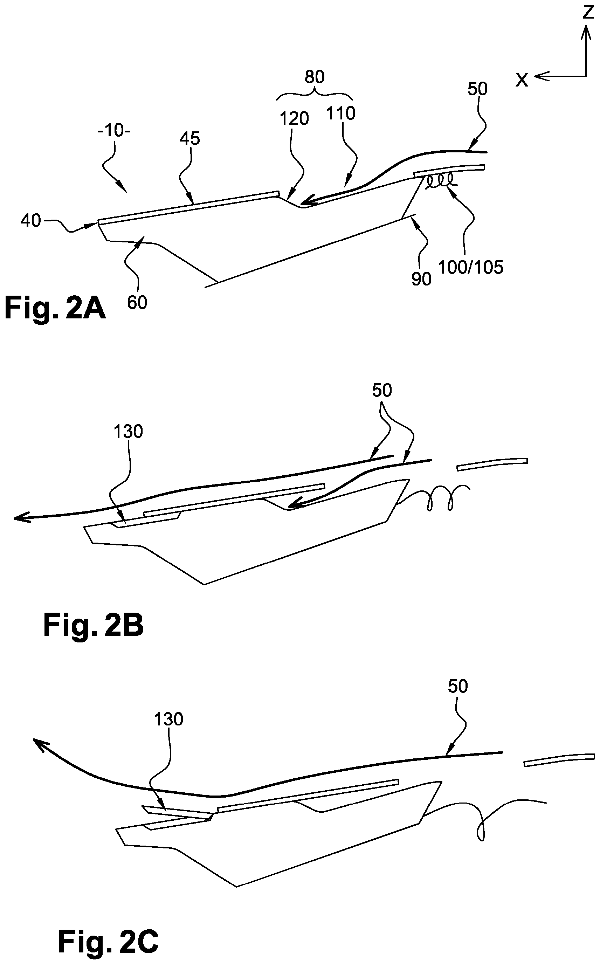

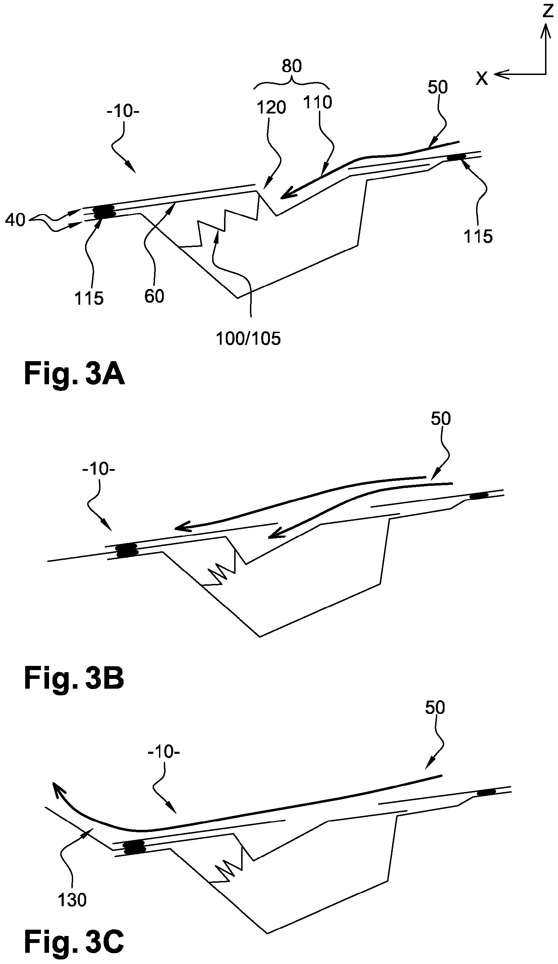

On se réfère maintenant aux figures 2A à 2C, et 3A à 3C, qui illustrent deux exemples de réalisation d'un becquet 10 selon l'invention.

Le becquet 10 comporte une première partie 40 munie d'une face supérieure 45 sensiblement alignée avec un prolongement imaginaire d'une ligne d'écoulement d'air 50 du toit 20, pour des raisons aérodynamiques et/ou pour des raisons de style.

La première partie 40 comporte une partie amont, destinée à être fixé sur le véhicule, et une partie aval.

Selon un mode de réalisation, la partie aval forme une saillie au-dessus de la lunette arrière 30. Les notions de position amont et aval se réfèrent à l'écoulement de l'air 50 sur la face supérieure 45 du becquet 10 lorsque le véhicule avance.

Le becquet 10 comporte également une deuxième partie 60, montée mobile par rapport à la première partie 40, entre une position rétractée (amont) et une position sortie (aval). La deuxième partie 60 est montée, en position rétractée, au moins partiellement sous la première partie 40. La deuxième partie 60 est rétractable sous la première partie 40.

En position sortie, la deuxième partie 60 est déplacée vers l'aval selon l'écoulement de l'air 50 sur la face supérieure 45 du becquet 10, de façon à augmenter la longueur du becquet 10 vers l'arrière, c'est-à-dire de façon à augmenter la portion de becquet en saillie au-dessus de la lunette arrière 30. C'est la position de la deuxième partie 60 lorsque le véhicule est en mouvement à grande vitesse (supérieure à 100km/h). C'est-à-dire lorsque le flux d'air aérodynamique (lié au déplacement du véhicule) est important sur la face supérieure 45 du becquet 10.

En position rétractée, la deuxième partie 60 est dans une position amont, au plus près du toit 20. C'est la position de la deuxième partie 60 au repos, c'est-à-dire lorsque le véhicule n'est pas en mouvement : aucun flux d'air aérodynamique (lié au déplacement du véhicule) ne s'écoule sur la face supérieure 45 du becquet 10.

Le becquet 10 comporte un système de déplacement passif 70 apte à déplacer la deuxième partie 60, de sa position rétractée vers sa position sortie, en fonction de l'écoulement de l'air 50 sur la face supérieure 45 du becquet 10.

On appelle déplacement passif, un déplacement ne nécessitant pas un apport d'énergie dédié à cette fonction de déplacement de la deuxième partie 60, notamment un apport d'énergie électrique.

La deuxième partie 60 est réalisée de façon à avoir une raideur permettant de supporter les efforts de la pression aérodynamique (coefficient de portance Cz), qui sont de l'ordre de 10 à 20 daN.

Ainsi, la deuxième partie 60 est de préférence réalisée avec des nervures, avantageusement esthétiques, s'imbriquant avec la première partie 40.

Le système de déplacement passif 70 comporte :
- au moins un moyen de transmission 80, sur la deuxième partie 60, de la pression générée par l'écoulement de l'air ;
- au moins un moyen de guidage 90 du déplacement de la deuxième partie 60 ; et
- au moins un moyen de rappel 100 de la deuxième partie 60, dans sa position rétractée.

### Le moyen de transmission 80.

La face supérieure 45 du becquet 10 comporte au moins une ouverture 110 adaptée à canaliser l'écoulement d'air 50 provenant du toit sur au moins une surface d'appui 120 de la deuxième partie 60, de façon transmettre sur la deuxième partie 60, la pression générée par l'écoulement de l'air. Ainsi, l'écoulement d'air 50 exerce un effort sur la surface d'appui 120 apte à déplacer la deuxième partie 60 vers sa position sortie. L'ouverture 110 et la surface d'appui 120 constitue alors un moyen de transmission 80.

Selon un exemple de réalisation, la face supérieure 45 du becquet 10 comporte une seule ouverture 110 s'étendant sur sensiblement toute la largeur du becquet 10. La largeur du becquet est la dimension prise dans l'axe Y du véhicule, c'est-à-dire dans la largeur du véhicule.

Selon un autre exemple de réalisation, la face supérieure 45 du becquet 10 comporte plusieurs ouvertures 110. Selon ce mode de réalisation, les ouvertures sont de préférence alignées sur un axe transversal du véhicule (dans l'axe Y du véhicule).

La deuxième partie 60 comporte alors autant de surfaces d'appui 120 que d'ouvertures 110. Chaque ouverture 110 coopère alors avec une des surfaces d'appui 120.

La surface d'appui 120 est une surface inclinée qui s'oppose à l'écoulement d'air 50. Elle est donc orientée en regard de l'ouverture 110, et son extrémité aval est plus haute que son extrémité amont, comme l'illustre les figures 2A à 2C.

On comprend alors que plus la vitesse du véhicule augmente, plus l'écoulement d'air 50 exerce un effort important sur la surface d'appui 120, plus la deuxième partie 60 se déplace en aval, vers sa position sortie (figure 2A, puis figure 2B, puis figure 2C). Ainsi, plus la vitesse du véhicule augmente plus le becquet s'allonge vers l'arrière (voir figure 2C). Le becquet 10, ainsi en extension, permet de décoller le flux d'air et de générer son recollement plus en arrière du véhicule.

Du fait de l'utilisation de ce moyen de transmission 80, la deuxième partie 60 (mobile) est réalisée de façon à être légère et facilement déplaçable par la pression de l'air.

De ce fait, la deuxième partie 60 peut également être réalisée par moussage interne avec une épaisseur lui permettant d'avoir l'inertie suffisante pour supporter les efforts de la pression aérodynamique.

Selon un mode de réalisation, la deuxième partie comporte un système d'évacuation de l'eau à la base de la surface d'appui 120. En effet, à ce niveau, la forme en V de la partie 60 peut faire l'objet d'une rétention d'eau, qu'il est préférable d'évacuer.

### Le moyen de guidage 90

Selon un mode de réalisation (figure 2A à 2C), la deuxième partie 60 est montée mobile (par rapport à la première partie 40) sur une partie du becquet, qui peut être la première partie 40, au moyen d'au moins une liaison glissière. Une telle liaison permet un déplacement par translation de la deuxième partie 60.

Le moyen de guidage 90 peut ainsi être un système coulissant comportant au moins une coulisse 92 (non représentée sur les figures) par laquelle la deuxième partie 60 glisse, dans un sens ou dans l'autre, dans l'axe de la coulisse 92.

Pour ce faire la deuxième partie 60 comporte un organe 94 (non représenté sur les figures), tel qu'une nervure, coopérant avec la coulisse 92 afin de se déplacer le long de ladite coulisse 92.

Afin de faciliter le déplacement par l'air, le moyen de guidage 90 comporte avantageusement des appuis recouverts par des matériaux favorisants le glissement tels que le téflon.

Afin de préserver le déplacement par glissement, la première partie 40 comporte avantageusement des joints 115 de type racleur à ses extrémités, afin d'éviter que des pollutions ne pénètrent dans le moyen de guidage 90, entre les deux parties 40 et 60.

### Le moyen de rappel 100

Le moyen de rappel 100 peut comporter au moins un élément élastique 105, tel qu'un ressort. De préférence le moyen de rappel 100 comporte plusieurs éléments élastiques 105. Ce ressort 105 est fixé d'une part à une partie fixe du becquet 10, par exemple la première partie 40, et d'autre part, à la deuxième partie 60.

Selon un mode de réalisation (figures 2A à 2C), lorsque la deuxième partie 60 est en position rétractée, le ressort 105 est en position de repos. Ainsi, on note qu'au repos, la deuxième partie 60 est maintenue en position par le ressort 105, de sorte que cette partie 60 ne bouge pas. Le ressort est calibré pour permettre un déplacement de la partie 60 qu'à partir d'un certain niveau d'effort, fonction de la vitesse du véhicule notamment. Ainsi, c'est bien l'écoulement d'air 50 qui rend mobile la deuxième partie 60, par la pression de l'air sur la surface d'appui 120 qui est fonction de la vitesse du véhicule. On peut par exemple utiliser un ressort ayant une constante de raideur comprise entre 0.2 et 1 daN. Selon un autre mode de réalisation (figures 3A à 3C), le ressort 105 est comprimé lorsque la deuxième partie 60 passe d'une position rétractée vers une position sortie.

On comprend alors que plus la vitesse du véhicule diminue, plus l'écoulement d'air 50 exerce un effort faible sur la surface d'appui 120, plus la deuxième partie 60 revient vers l'amont (vers sa position rétractée) sous l'effet de la force de rappel du moyen de rappel 100 : la deuxième partie 60 se rétracte vers sa position rétractée. Ainsi, plus la vitesse du véhicule diminue plus le becquet 10 se raccourcit.

Le déplacement passif peut être réalisé de façon continue, c'est-à-dire que toutes les positions intermédiaires entre les deux positions extrêmes (entrée et sortie) sont possibles. Le déplacement est ainsi proportionnel à la force exercée par l'écoulement de l'air sur la deuxième partie 60.

Le déplacement passif peut être réalisé de façon discontinue, c'est-à-dire que certaines positions intermédiaires entre les deux positions extrêmes (entrée et sortie) sont atteintes en fonction de seuils : lorsque la force exercée par l'écoulement de l'air 50 sur la deuxième partie 60 atteint un certain seuil, alors la deuxième partie 60 se déplace d'une certaine longueur, correspondant, par exemple, à des crans sur la coulisse 92.

Selon un mode de réalisation, la deuxième partie 60 est munie d'une face supérieure 65 portant la surface d'appui 120. En aval de la surface d'appui 120, la face supérieure 65 porte une paroi mobile 130 (figures 2B, 2C).

Cette paroi mobile 130 est montée mobile par rapport à la deuxième partie 60, de façon à pouvoir s'ouvrir passivement vers le haut (figure 2C), lorsque la deuxième partie 60 est en position totalement sortie ou sensiblement proche de cette position. Cette paroi mobile joue alors un second rôle aérodynamique en permettant d'augmenter la portance ou le décollement du flux d'air 50.

Cette paroi mobile 130 est configurée pour être affleurante (ni en saillie ni en dépression) avec la face supérieure 65, en position de fermeture, comme l'illustre la figure 2B.

La paroi mobile 130 est mise en mouvement par un moyen d'actionnement 140 passif (non représenté), tel qu'un système de ressort. Dans un tel système, les ressorts son comprimés lorsque la paroi mobile 130 est en position fermée, sous la première partie 40 du becquet 10. Lorsque la paroi mobile 130 est libérée de dessous la première partie 40 du becquet 10, alors les ressorts se détendent en position de repos.

Bien évidemment le moyen de rappel 100 exerce une force de rappel sur la deuxième partie 60 suffisamment forte pour permettre la compression des ressorts du moyen d'actionnement 140. Si bien, que lorsque le véhicule ralentit, la deuxième partie 60 revient vers sa position rétractée tout en refermant la paroi mobile 130.

Selon l'exemple de la figure 2C, la paroi mobile 130 est montée en rotation autour d'un axe 140 orienté transversalement par rapport au véhicule.

De façon avantageuse, la première partie 40 et/ou la deuxième partie 60 sont en matière thermoplastique.

De façon avantageuse, la deuxième partie 60 est réalisée dans un matériau plus léger que la première partie.

L'invention n'est pas limitée aux modes de réalisation présentés et d'autres modes de réalisation apparaîtront clairement à l'homme du métier. Il est notamment possible, selon un mode de réalisation, que la partie aval de la deuxième partie forme 60 une saillie au-dessus de la lunette arrière 30.

## Revendications

1. Becquet (10) arrière pour véhicule automobile destiné à être disposé dans une région d'un bord arrière de toit (20) au-dessus d'une lunette arrière (30), ledit becquet (10) comportant une première partie (40) munie d'une face supérieure (45) sensiblement alignée avec un prolongement imaginaire d'une ligne d'écoulement d'air (50) du toit (20), le becquet comportant une deuxième partie (60), montée mobile par rapport à la première partie (40), entre une position rétractée et une position sortie dans laquelle la portion de becquet en saillie au-dessus de la lunette arrière (30) est augmentée, **caractérisé en ce que** le becquet comporte en outre un système de déplacement passif (70) apte à déplacer la deuxième partie (60) en fonction de l'écoulement de l'air (50) sur la face supérieure (45) du becquet (10).

2. Becquet (10) selon la revendication 1, dans lequel le système de déplacement passif (70) comporte :
- au moins un moyen de transmission (80), sur la deuxième partie (60), de la pression générée par l'écoulement de l'air (50) ;
- au moins un moyen de guidage (90) du déplacement de la deuxième partie (60) ; et
- au moins un moyen de rappel (100) de la deuxième partie (60), dans sa position rétractée.

3. Becquet (10) selon la revendication 2, dans lequel la face supérieure (45) du becquet (10) comporte au moins une ouverture (110) adaptée à canaliser l'écoulement d'air (50) provenant du toit sur au moins une surface d'appui (120) de la deuxième partie (60), de façon à transmettre sur la deuxième partie (60), la pression générée par l'écoulement de l'air, l'ouverture (110) et la surface d'appui (120) constituant un moyen de transmission (80).

4. Becquet (10) selon la revendication 3, dans lequel la deuxième partie (60) comporte des nervures permettant de supporter des efforts liés à l'écoulement d'air (50) provenant du toit sur la surface d'appui (120).

5. Becquet (10) selon l'une des revendications 3 et 4, dans lequel la deuxième partie (60) est réalisée par moussage interne avec une épaisseur permettant de supporter des efforts liés à l'écoulement d'air (50) provenant du toit sur la surface d'appui (120).

6. Becquet (10) selon l'une des revendications 3 à 5, dans lequel la deuxième partie (60) comporte un système d'évacuation de l'eau à la base de la surface d'appui (120).

7. Becquet (10) selon l'une des revendications 2 à 6, dans lequel la deuxième partie (60) est montée mobile par rapport à la première partie 40 sur une partie du becquet au moyen d'une liaison glissière.

8. Becquet (10) selon la revendication 7, dans lequel le moyen de guidage (90) est un système coulissant comportant au moins une coulisse (92) par laquelle la deuxième partie (60) glisse, dans un sens ou dans l'autre, dans l'axe de la coulisse (92).

9. Becquet (10) selon la revendication 8, dans lequel le moyen de guidage (90) comporte des appuis recouverts de téflon.

10. Becquet (10) selon l'une des revendications 2 à 9, dans lequel le moyen de rappel (100) comporte au moins un élément élastique (105), tel qu'un ressort.

11. Becquet (10) selon l'une des revendications précédentes, dans lequel la première partie (40) comporte des joints de type racleur à ses extrémités.

12. Becquet (10) selon l'une des revendications précédentes, dans lequel la deuxième partie (60) est munie d'une face supérieure (65) portant la surface d'appui (120) et une paroi mobile (130) en aval de la surface d'appui (120).

13. Becquet (10) selon la revendication 12, dans lequel la paroi mobile (130) est montée mobile par rapport à la deuxième partie (60), de façon à pouvoir s'ouvrir passivement vers le haut, lorsque la deuxième partie (60) est en position totalement sortie ou sensiblement proche de cette position.

14. Becquet (10) selon la revendication 13, dans lequel la paroi mobile (130) est mise en mouvement par un moyen d'actionnement (140) passif, tel qu'un système de ressort.

15. Becquet (10) selon l'une des revendications 12 à 14, dans lequel la paroi mobile (130) est montée mobile en rotation autour d'un axe (70) orienté transversalement par rapport au véhicule lorsque le becquet (10) est monté sur le véhicule.

16. Becquet (10) selon l'une des revendications 3 à 6 comportant plusieurs ouvertures (110) et plusieurs surfaces d'appui (120).

17. Becquet (10) selon l'une des revendications précédentes, dans lequel la première partie (40) et/ou la deuxième partie (60) sont en matière thermoplastique.

## Patentansprüche

1. Heck-Spoiler (10) für Kraftfahrzeug, der dazu bestimmt ist, in einem Bereich eines hinteren Dachrandes (20) oberhalb eines Heckfensters (30) angeordnet zu werden, wobei der Spoiler (10) einen ersten Teil (40) aufweist, der mit einer oberen Fläche (45) versehen ist, die im Wesentlichen in Flucht mit einer imaginären Verlängerung einer Luftstromlinie (50) des Dachs (20) ist, wobei der Spoiler einen zweiten Teil (60) aufweist, der relativ zu dem ersten Teil (40) beweglich gelagert ist zwischen einer eingezogenen Position und einer ausgezogenen Position, in welcher der Abschnitt des Spoilers, der über das Heckfenster (30) übersteht, vergrößert ist, **dadurch gekennzeichnet, dass** der Spoiler ferner ein passives Bewegungssystem (70) aufweist, das imstande ist, den zweiten Teil (60) in Abhängigkeit von dem Luftstrom (50) auf der oberen Fläche (45) des Spoilers (10) zu bewegen.

2. Spoiler (10) nach Anspruch 1, wobei das passive Bewegungssystem (70) Folgendes aufweist:
- wenigstens ein Mittel zum Übertragen (80), auf den zweiten Teil (60), des Drucks, der von dem Luftstrom (50) erzeugt wird;
- wenigstens ein Mittel zum Führen (90) der Bewegung des zweiten Teils (60); und
- wenigstens ein Mittel zum Rückstellen (100) des zweiten Teils (60) in seine eingezogene Position.

3. Spoiler (10) nach Anspruch 2, wobei der obere Teil (45) des Spoilers (10) wenigstens eine Öffnung (110) aufweist, die eingerichtet ist, um den vom Dach stammenden Luftstrom (50) auf wenigstens einer Auflagefläche (120) des zweiten Teils (60) so zu kanalisieren, dass auf den zweiten Teil (60) der Druck übertragen wird, der von dem Luftstrom (50) erzeugt wird, wobei die Öffnung (110) und die Auflagefläche (120) ein Übertragungsmittel (80) bilden.

4. Spoiler (10) nach Anspruch 3, wobei der zweite Teil (60) Rippen aufweist, die gestatten, mit dem vom Dach stammenden Luftstrom (50) verbundene Kräfte auf der Auflagefläche (120) auszuhalten.

5. Spoiler (10) nach einem der Ansprüche 3 und 4, wobei der zweite Teil (60) durch Einschäumen mit einer Dicke realisiert ist, die gestattet, mit dem vom Dach stammenden Luftstrom (50) verbundene Kräfte auf der Auflagefläche (120) auszuhalten.

6. Spoiler (10) nach einem der Ansprüche 3 bis 5, wobei der zweite Teil (60) ein System zum Ableiten von Wasser an der Basis der Auflagefläche (120) aufweist.

7. Spoiler (10) nach einem der Ansprüche 2 bis 6, wobei der zweite Teil (60) mittels einer Gleitverbindung relativ zu dem ersten Teil (40) beweglich auf einem Teil des Spoilers gelagert ist.

8. Spoiler (10) nach Anspruch 7, wobei das Führungsmittel (90) ein Schiebesystem ist, das ein Schiebeelement (92) aufweist, durch das der zweite Teil (60), in der einen oder in der anderen Richtung, in der Achse des Schiebeelements (92) gleitet.

9. Spoiler (10) nach Anspruch 8, wobei das Führungsmittel (90) mit Teflon beschichtete Auflagen aufweist.

10. Spoiler (10) nach einem der Ansprüche 2 bis 9, wobei das Rückstellmittel (100) wenigstens ein elastisches Element (105), wie eine Feder, aufweist.

11. Spoiler (10) nach einem der vorhergehenden Ansprüche, wobei der erste Teil (40) an seinen Enden Dichtungselemente des Abstreifertyps aufweist.

12. Spoiler (10) nach einem der vorhergehenden Ansprüche, wobei der zweite Teil (60) mit einer oberen Fläche (65) versehen ist, welche die Auflagefläche (120) und eine bewegliche Wand (130) stromabwärts der Auflagefläche (120) trägt.

13. Spoiler (10) nach Anspruch 12, wobei der bewegliche Teil (130) relativ zu dem zweiten Teil (60) in der Form beweglich montiert ist, dass er sich passiv nach oben öffnen kann, wenn der zweite Teil (60) in vollständig ausgezogener Position oder im Wesentlichen dieser Position nahe ist.

14. Spoiler (10) nach Anspruch 13, wobei der bewegliche Teil (130) durch ein passives Betätigungsmittel (140), wie ein Federsystem, in Bewegung versetzt wird.

15. Spoiler (10) nach einem der vorhergehenden Ansprüche 12 bis 14, wobei die bewegliche Wand (130) um eine Achse (70) drehbeweglich gelagert ist, die relativ zu dem Fahrzeug quer ausgerichtet ist, wenn der Spoiler (10) an dem Fahrzeug gelagert ist.

16. Spoiler (10) nach einem der vorhergehenden Ansprüche 3 bis 6, aufweisend mehrere Öffnungen (110) und mehrere Auflageflächen (120).

17. Spoiler (10) nach einem der vorhergehenden Ansprüche, wobei der erste Teil (40) und/oder der zweite Teil (60) aus thermoplastischem Material sind.

## Claims

1. Rear spoiler (10) for a motor vehicle, intended for being arranged in a region of a rear edge of the roof (20) above a rear window (30), said spoiler (10) comprising a first portion (40) provided with an upper surface (45) substantially aligned with an imaginary extension of an air-flow line (50) of the roof (20), the spoiler including a second portion (60), mounted movable relative to the first portion (40), between a retracted position and an extended position in which the spoiler portion projecting above the rear window (30) is increased, **characterised in that** the spoiler further comprises a passive movement system (70) capable of moving the second portion (60) as a function of the air flow (50) on the upper surface (45) of the spoiler (10).

2. Spoiler (10) according to claim 1, wherein the passive movement system (70) comprises:
- at least one means (80) for transmitting, on the second portion (60), the pressure generated by the air flow (50);
- at least one means (90) for guiding the movement of the second portion (60); and
- at least one means (100) for returning the second portion (60) to its retracted position.

3. Spoiler (10) according to claim 2, wherein the upper surface (45) of the spoiler (10) comprises at least one opening (110) adapted to channel the air flow (50) from the roof on at least one bearing surface (120) of the second portion (60), so as to transmit on the second portion (60) the pressure generated by the air flow, the opening (110) and the bearing surface (120) forming a transmission means (80).

4. Spoiler (10) according to claim 3, wherein the second portion (60) comprises ribs capable of withstanding the forces related to the air flow (50) from the roof on the bearing surface (120).

5. Spoiler (10) according to claim 3 or 4, wherein the second portion (60) is manufactured by internal foaming with a thickness capable of withstanding the forces related to the air flow (50) from the roof on the bearing surface (120).

6. Spoiler (10) according to one of claims 3 to 5, wherein the second portion (60) comprises a water evacuation system at the bottom of the bearing surface (120).

7. Spoiler (10) according to one of claims 2 to 6, wherein the second portion (60) is mounted movable relative to the first portion (40) on a portion of the spoiler by means of a sliding connection.

8. Spoiler (10) according to claim 7, wherein the guide means (90) is a sliding system comprising at least one slide (92) by which the second portion (60) slides, in one direction or the other, in the axis of the slide (92).

9. Spoiler (10) according to claim 8, wherein the guide means (90) includes Teflon-covered supports.

10. Spoiler (10) according to one of claims 2 to 9, wherein the return means (100) comprises at least one elastic element (105) such as a spring.

11. Spoiler (10) according to one of the preceding claims, wherein the first portion (40) comprises scraper type seals at its ends.

12. Spoiler (10) according to one of the preceding claims, wherein the second portion (60) is provided with an upper surface (65) supporting the bearing surface (120) and a movable wall (130) downstream from the bearing surface (120).

13. Spoiler (10) according to claim 12, wherein the movable wall (130) is mounted movable relative to the second portion (60), so that it can passively open upwards, when the second portion (60) is in the fully extended position or substantially close to this position.

14. Spoiler (10) according to claim 13, wherein the movable wall (130) is moved by passive actuation means (140) such as a spring system.

15. Spoiler (10) according to one of claims 12 to 14, wherein the movable wall (130) is mounted movable in rotation about an axis (70) oriented transversely relative to the vehicle when the spoiler (10) is mounted on the vehicle.

16. Spoiler (10) according to one of claims 3 to 6 comprising several openings (110) and several bearing surfaces (120).

17. Spoiler (10) according to one of the preceding claims, wherein the first portion (40) and/or the second portion (60) are made of thermoplastic material.
